# EUROPEAN PATENT SPECIFICATION

(11) **EP 2 695 328 B1**
(45) Date of publication and mention of the grant of the patent: **09.10.2019**
(21) Application number: 11712583.1
(22) Date of filing: 07.04.2011
(51) Int. Cl.: H04L 12/24

(54) **OPTIMIZATION OF NETWORK CONFIGURATION**
OPTIMIERUNG DER NETZWERK-KONFIGURATION
OPTIMISATION DE LA CONFIGURATION DU RÉSEAU

(43) Date of publication of application: 12.02.2014
(73) Proprietor: Nokia Solutions and Networks Oy, 02610 Espoo (FI)
(72) Inventor: PAKULSKI, Maciej, PL-55-003 Czernica (PL); PISOWACKI, Patryk, PL-50-018 Wroclaw (PL); WAZ-AMBROZEWICZ, Andrzej, 01139 Dresden (PL)
(74) Representative: Kolster Oy Ab
(86) International application number: PCT/EP2011/055431
(87) International publication number: WO 2012/136261

(56) References cited:
- WO-A1-2009/083035
- US-A1- 2008 240 104
- US-A1- 2010 015 992
- US-B1- 6 539 427
- US-B1- 7 630 326

## Description

### FIELD

The invention relates to the field of telecommunications, and especially to network configuration.

### BACKGROUND

The evolvement of wireless cellular communications technologies and different services increase user requirements to obtain over a wireless connection the same broadband services that are obtained via a fixed connection. To meet the user needs and the increased use of the services, the networks are, among other things, dimensioned during a network planning or updating process to have a sufficient amount of network nodes, each with a certain configuration so that the network operator should be able to keep quality of the service, defined by service parameter settings and determined by measured service parameter values, at a desired lever. An example of such parameters is call drop probabilities which should be kept at a level low enough. Hence, one of dimensioning rules is that the actual handled traffic load should never approach a load of 100 percent. In other words, the network is dimensioned using corresponding peak-hour traffic as a basis for dimensioning in each network part, thereby causing the network to be over dimensioned. To ensure that the dimensioning complies with the above rule, the network's traffic is monitored and the monitoring results are used to maintain and upgrade/downgrade resources to meet the changing requirements. Another cause for "overdimensioning" is that during network dimensioning it is ensured that traffic can be rerouted in case a failure occurs in the network.

Prior art which is related to this field of technology can be found in e.g. document US 6 539 427 B1 disclosing a dynamically adaptive network element in a feedback-based data network, and in document US 7 630 326 B1 disclosing application-driven agile networks.

### SUMMARY

An aspect provides a solution in which "overdimensioning" may be decreased by predefining network node -specific configuration profiles by means of two or more expected traffic scenarios so that a network node has at least two different configuration profiles, one of which is in use at a time, and each configuration profile will be associated with a trigger event, an occurrence of which will change the configuration profile in use to another configuration profile in the network node.

Various aspects of the invention comprise methods, an apparatus, a system and a computer program product as defined in the independent claims. Further embodiments of the invention are disclosed in the dependent claims.

### BRIEF DESCRIPTION OF THE DRAWINGS

In the following the invention will be described in greater detail by means of preferred embodiments with reference to the attached drawings, in which
Figure 1 shows simplified architecture of a network and a schematic diagram of apparatuses according to an embodiment; and
Figures 2 to 5 illustrate different exemplary functionalities.

### DETAILED DESCRIPTION OF SOME EMBODIMENTS

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments of present invention are applicable to any network, network node, corresponding components, corresponding apparatuses, and/or to any communication system or any combination of different communication systems. The communication system may be a wireless communication system or a communication system utilizing both fixed networks and wireless networks. The protocols used and the specifications of communication systems, and apparatuses, especially in wireless communication, develop rapidly. Such development may require extra changes to an embodiment. Therefore, all words and expressions should be interpreted broadly and are intended to illustrate, not to restrict, the embodiment.

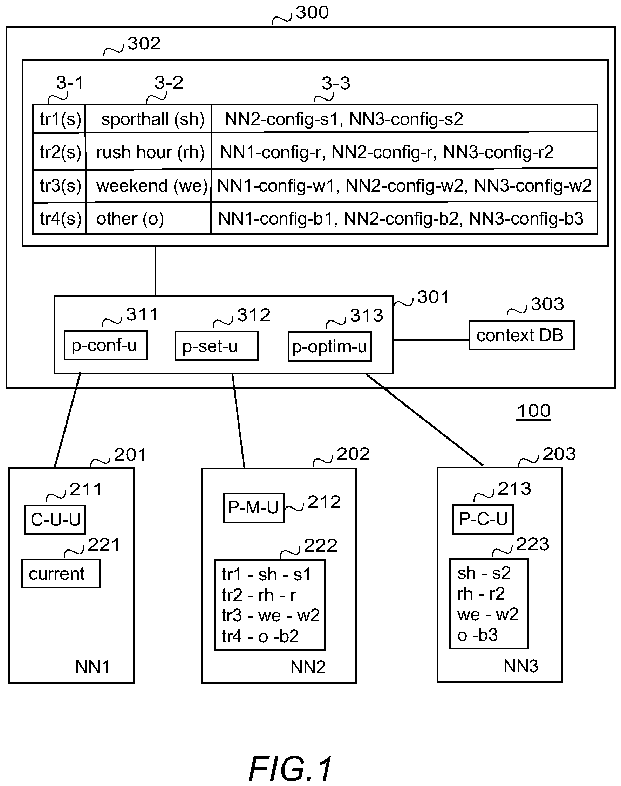

A simplified general architecture of a communication system 100 is illustrated in Figure 1. As can be seen, the system 100 illustrated in Figure 1 comprises network nodes 201, 202, 203 configured to be in connection with an operation and maintenance system 300, and more precisely, within the operation and maintenance system, to an operation and maintenance server entity 301 that is connected to databases 302, 303 in the operations, administrations and maintenance system. The illustrated apparatuses (network nodes, a server entity) have some elements and functional entities; the apparatuses, elements and entities all being logical units whose implementation may differ from what is shown. The connections shown in Figure 1 are logical connections; the actual physical connections may be different. It is apparent to a person skilled in the art that the systems also comprise other, apparatuses, functions and structures.

The network nodes 201, 202, 203 may be network nodes in a radio access network or in a core network, or one or more of them may be in a core network and the other(s) in the radio access network. For example, the network may be based on long term evolution (LTE), LTE-Advanced (LTE-A), WiMax, WiFi, 4 G (fourth generation), Mobile Broadband Wireless Access (MBWA), GSM (Global System for Mobile Communications), system architecture evolution (SAE), evolved packet core (EPC), 3 G technologies, like UMTS (Universal Mobile Telecommunications System) and CDMA-2000.

Each of the network nodes may be any computing apparatus or device configured to perform functionality according to an implementation/embodiment described in detail below. In the illustrated example, one of the network nodes, the network node 201, is configured to implement a centralized solution, in which a configuration updating unit (C-U-U) 211 is configured to receive configurations from the operation and maintenance server entity 301 and update a configuration currently in use 221 with a received configuration. Further, one of the network nodes, the network node 202, is configured to implement a distributed solution in which the network node comprises memory 222 configured to store two or more configuration profiles for the network node with corresponding trigger event (an event triggering the change of the configuration), and a profile managing unit (P-M-U) 212 configured to trigger the change of a profile in use in response to a trigger event taking place. The profile managing unit 212 may be configured to receive new configuration profiles and/or trigger events, and/or updates trigger events and/or configuration profiles, and set the values to the memory 222. Yet one of the network nodes, the network node 203, is configured to implement a hybrid solution in which the network node comprises memory 223 configured to store two or more configuration profiles for the network node, and a profile changing unit (P-C-U) 213 configured to change a configuration profile in use to another configuration profile in response to receiving a corresponding instruction from the operation and maintenance server entity 301. The profile changing unit 213 may also be configured to receive new configuration profiles and/or updates to configuration profiles and set the values to the memory 232. Further, the network nodes may comprise other units, like units configured to monitor and report the network behaviour to the operations, administrations and maintenance system, and the network nodes comprise different interfaces, such as receiving units and sending units (not illustrated in Figure 1).

The operations, administrations and maintenance (OAM) system 300 may comprise one or several nodes or OAM entities that typically, but not necessarily, are computing devices configured to provide network management functions for operations, administrations, and maintenance, including dimensioning and configuring of network systems, but not to manage the traffic in the network systems. The OAM system 300 may be an element management system (EMS) or network management system (NMS) in which an OAM entity manages one or more of a specific type of a network node, OAM entities being configured to exchange information between other entities in the OAM system and with network nodes. Depending on embodiment, the OAM system or an OAM entity may be configured to perform one or more of OAM server entity 301 functionalities described below, and it may be configured to perform functionalities from different embodiments. For this purpose, the OAM server entity 301 comprises a profile configuration unit (p-conf-u) 311 for forming network node - specific configuration profiles as will be described below in more detail and for storing the configuration profiles to a profile database 302. The OAM server entity 301 may comprise a profile setting unit (p-set-u) 312 for sending, when the centralized and/or hybrid solution is supported, to a network node the configuration that should be used and/or an indication triggering the change of the configuration. Further, the profile setting unit may be configured to send new configuration profiles and/or updates to existing configuration profiles. The OAM server entity 301 may further comprise a profile optimizing unit (p-optim-u) 313 for receiving network performance monitoring results, like KPIs (key parameter indicators), from the network nodes, and to optimize the configuration profiles.

In the illustrated embodiment, the OAM server entity comprises the profile configuration unit, the profile setting unit and the profile optimizing unit. In another embodiment, the OAM server entity comprises the profile configuration unit and one of the profile setting unit and the profile optimizing unit. In a further embodiment, using the distributed solution and allowing the network nodes themselves to optimize the predefined configurations, or in which the predefined configuration profiles are not optimized, the OAM server entity comprises the profile configuration unit but neither of the profile setting unit and the profile optimizing unit. Further, the OAM system/OAM server entity may comprise other units, and it comprises different interfaces, such as a receiving unit and a sending unit (not illustrated in Figure 1).

The profile database 302 comprises predetermined network node -specific configuration profiles and they may be stored event-specifically, as in the illustrated example, network node -specifically or using some other sorting mechanism for network node-specific configuration profiles defined for different events. Examples will be described below. In case only the distributed solution is supported, the profile database may be implemented so that it is distributed to the corresponding network nodes, each storing their configuration profiles.

In the illustrated example, there is also a context database 303 comprising predictable information on traffic expectations of different events that can be used by the profile configuration unit to provide a configuration profile for a network node for that specific event beforehand. The predictable information may be obtained rather easily; it is a known fact that most of the time the users behave in a repetitive and predictable way in time and in space. For example, people tend to take the same route in similar hours, when going to work, spend Monday evenings at home but on Friday evening there are lot of users in a restaurant area, etc. It is possible to identify external factors that directly influence the behavior of the users and in consequence the usage patterns of mobile network, and thereby to the traffic scenarios, like call types and durations and spatial distribution of calls. Thus, the predictable information may be derived from explicit facts or by analyzing real-world statistics. Examples of the predictable information and for which they can be used include the following:
- explicit time of day information to introduce network "day" and "night" profiles, and/or to tune the network nodes to tackle the rush hour in the morning and afternoon;
- explicit day of week and/or month data to modify the behavior of network nodes in weekends and/or holidays to take into account that more people most probably are at a seaside or at ski slopes, less in the office area or school area;
- explicit information about events or special days, examples including hockey/football match at a stadium, Olympic games where there could be lots of people watching events or checking the results, new year's eve or Christmas with people sending wishes to their relatives, concert at the city market hall, a carnival in down town, etc.;
- weather profiles to take into account the weather's impact on users behavior, for example, if it rains there's going to be less outdoor voice calls but more indoor data calls, or if it snows during rush hours there's going to be more voice calls from the users caught in the traffic jams;
- specific operator connection fee settings affecting the network behavior, like free voice calls in the evening or on Sundays, one-time special offer for massive data download, etc.

However, it bears no significance for the embodiments how the predictable information is obtained, maintained or processed, and what the predictable information contains, and therefore it is not described in more detail herein. It suffices that there exist at least two different traffic scenarios which the configuration server, or more precisely, the configuration unit, can use for defining at least two different configuration profiles, and the configuration profiles may be defined one at a time, and the traffic scenarios need not to be stored to a database, they may be just fed or downloaded to the OAM server entity for the configuration.

The profile database 302 illustrated in Figure 1 contains configuration profiles 3-3 for events 3-2, each event being associated with one or more trigger event 3-1, and the network node NN2 202 contains in its memory 222 the configuration profiles and related trigger events predefined for the network node NN2, and the network node NN3 203 contains in its memory 223 the configuration profiles defined for the network node NN3. In the illustrated example, the configuration profiles in the network nodes are associated with an event identifier which may be used as a configuration profile identifier.

As can be seen from the Figure 1, a separate configuration needs not to be predefined for every network node for every event. It suffices that a configuration is predefined for the network nodes affected by the area. Further, for an event, two or more network nodes may have the same configuration. For example, the network nodes may have separate basic configuration profiles for weekends, for rush hours in weekdays and for non-rush hours in weekdays, and those network nodes that are affected by an event taking place is a specific location, like a sport hall, may have separate configuration profiles for events in the sport hall and while during the event, or when the event starts or ends, the affected network nodes change from one configuration profile to another and use their corresponding event configuration profile, non-affected network nodes use one of their basic configuration profiles.

Although the apparatuses, such as the OAM server entity and the network nodes, and the units have been depicted in Figure 1 as one entity, they may be implemented in one or more physical or logical entities or units. The units and functions may be software and/or software-hardware and/or firmware components (recorded indelibly on a medium such as read-only-memory or embodied in hard-wired computer circuitry).

The databases may be of any type, have any possible storage structure and being managed by any database management system.

The OAM entity, the network node and corresponding apparatuses implementing functionality or some functionality according to an embodiment may generally include a processor (not shown in Figure 1), controller, control unit, microcontroller, or the like connected to a memory and to various interfaces of the apparatus. Generally the processor is a central processing unit, but the processor may be an additional operation processor. The configuration updating unit (C-U-U) 211 and/or the profile managing unit (P-M-U) 212, and/or the profile changing unit (P-C-U) 213, and/or the profile configuration unit (p-conf-u) 311, and/or the profile setting unit (p-set-u) 312, and/or the profile optimizing unit (p-optim-u) 313 may be configured as a computer or a processor, or a microprocessor, such as a single-chip computer element, or as a chipset, including at least a memory for providing storage area used for arithmetic operation and an operation processor for executing the arithmetic operation. The configuration updating unit (C-U-U) 211 and/or the profile managing unit (P-M-U) 212, and/or the profile changing unit (P-C-U) 213, and/or the profile configuration unit (p-conf-u) 311, and/or the profile setting unit (p-set-u) 312, and/or the profile optimizing unit (p-optim-u) 313 may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions of one or more embodiments.

The receiving units and the transmitting units each provides an interface in an apparatus, the interface including a transmitter and/or a receiver or a corresponding means for receiving and/or transmitting information, such as data, content, control information, messages and performing necessary functions so that user data, content, control information, signalling and/or messages can be received and/or transmitted. The receiving and sending units may comprise a set of antennas, the number of which is not limited to any particular number.

The apparatuses, such as network nodes and the OAM server entity, may generally include volatile and/or non- volatile memory and typically store content, data, or the like. For example, the memory may store one or more of the databases or configuration profiles. Further, the memory may store computer program code such as software applications (for example, for the configuration updating unit (C-U-U) 211 and/or the profile managing unit (P-M-U) 212, and/or the profile changing unit (P-C-U) 213, and/or the profile configuration unit (p-conf-u) 311, and/or the profile setting unit (p-set-u) 312, and/or the profile optimizing unit (p-optim-u) 313) or operating systems, information, data, content, or the like for the processor to perform steps associated with operation of the apparatus in accordance with embodiments. The memory may be, for example, random access memory, a hard drive, or other fixed data memory or storage device. Further, the memory, or part of it, may be removable memory detachably connected to the apparatus.

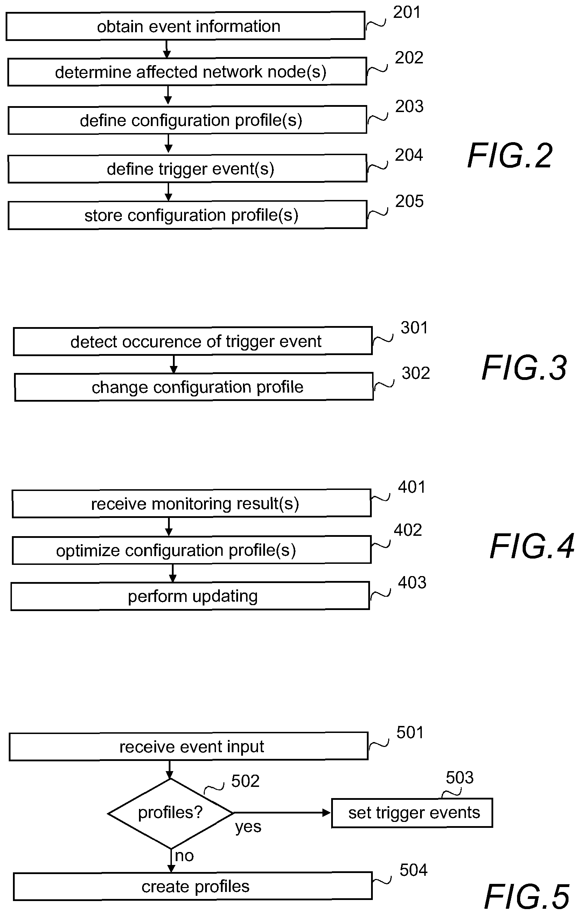

The network nodes may be configured to support self-organizing network (SON) functionality and execute the SON functions. However, it bears no significance how the SON functionality with corresponding SON management function and a SON database is implemented. The SON functions and/or SON database may be combined with the units and/or databases/memory described herein. It suffices that some predefined configuration profiles are used. An advantage of having predefined configuration profiles with trigger events also for network nodes supporting SON is that with the predefined configuration profiles a more proper configuration is in use in time compared to a situation in which the network node starts to change the configuration based on the measurement results. Figures 2 to 5 illustrate functionality in different exemplary embodiments.

Figure 2 illustrate functionality of the OAM server entity, or more precisely, the profile configuration unit, when one or more configuration profiles are determined for an event. In Figure 2, the OAM server entity obtains, in step 201, event information that may contain predictable information on traffic resource usage (i.e. expected traffic scenarios) on certain areas during a certain time. Using the information, network nodes (or in a very specific case, a network node) affected by the event are determined in step 202. A network node may be affected because the event increases/decreases/otherwise changes the network resource usage within the service area of the network. Then a configuration profile is defined in step 203 for each affected network node. It should be appreciated that there may be two or more network nodes having the same configuration profile, for example, because the event affects them in a similar way. For example, a configuration profile may comprise one or more of the following parameters: transmit power, handover rules, cell selection and/or cell reselection rules, call admission rules, packet scheduler settings, closed subscriber group mode, activation/deactivation of certain sectors, usage of specific antenna patterns, and antenna tilt. Then one or more trigger events are determined in step 204. A trigger event may be time-specific, like "07:30 am" meaning that the network node changes to this configuration profile when time is 07:30 am. **In an example useful to understand the invention, a** trigger event may also relate a certain event, like "detect network node xyz is down". A configuration profile may be associated with one, two or more trigger events that may be of the same type and/or of different type. Further, the trigger events may be defined event-specifically (for example, rush hour starts at 07:30) or event- and network node -specifically (for example, rush hour starts at 07:30 in a network node but at 07:31 in an adjacent network node). When the configuration profile or profiles are ready, i.e. determined, they are stored in step 205. Depending on implementation and supported solutions, all of them may be stored to the profile database, and in addition to that, or instead of storing them to the profile database, some/all/part of them may be stored to corresponding network nodes by downloading the configuration to the network node in question.

Thus, it is possible to optimize the network parameter plan for various predefined traffic distribution scenarios, for example by means of the Monte Carlo simulation and/or Simulated Annealing process providing optimized key parameter indicator values for each and every traffic distribution case (pattern) considered. The above process allows for finding the global minimum of the penalty function designed to represent violation of the considered network key performance indicators, and has an advantage over a SON-like process adapting in response to instant feedback due to the fact that potentially a huge amount of historical data may be utilized. Further, information about special non-recurring events (political gathering, sports events etc...) can be processed beforehand off-line, thereby enabling use of time consuming analysis dedicated to test and optimization of various parameter sets in the search for the optimal setting. A further advantage, compared with a mechanisms that is not aware of explicit nature of specific events (like SON mechanisms), is that the latter mechanism may result in a configuration that represents some local optimum (non-optimal local minimums of the weighted sum of key parameter indicators), whereas the functionality described above provides tool to obtain a global optimum, for network usage pattern/time of the day/time of the week on given area.

Figure 3 illustrates the use of the different predefined configuration profiles. While a network node is using one configuration, an occurrence of a trigger event is detected in step 301. As explained above, the trigger event may be a certain time of a day/month/weekend. When the occurrence of the trigger event is detected, a configuration profile currently in use is changed, in step 302, to another (new) configuration profile, to the configuration profile that is associated with the trigger event.

In the distributed solution, a network node, or more precisely, the profile managing unit in the network node may perform both steps. In the centralized solution, the OAM server entity, or more precisely, the profile setting unit, detects the occurrence of the trigger event, and changes the configuration profile by sending the configuration settings of the new configuration profile to the corresponding network node, and the network node, or more precisely, the configuration updating unit resets the configuration (i.e. the parameters and/or corresponding values) in the network node to be aligned to the configuration received. In the hybrid solution, the profile setting unit in the OAM server entity detects the trigger event, and the configuration profile is changed by sending from the OAM server entity "change current configuration profile to configuration profile NN" message to the network node which, or more precisely, the configuration changing unit in the network node, then changes the configuration profile.

By means of the trigger events it is possible to detect in advance a need to perform the reconfiguration, and by means of the associated configuration profile for a network node, it is known in advance how to reconfigure. When a need to perform network node reconfiguration is known in advance, the network may prepare itself at a most convenient time for traffic changes. For example, during a night (to not cause problem to users during the reconfiguration) preceding a popular sport event the network may prepare itself for the increase of a bandwidth demand in stadium zones by allocating the frequency spectrum normally used by the cells serving neighbouring business area to serve stadium zone for a game played on Sunday. Thus, when the game starts, the network configuration is already adjusted. That is an advantage over a reactive scenario in which some amount of reported problems is needed to make the network aware of the need for reconfiguration.

Figure 4 illustrates an implementation, in which the predefined configuration profiles in use are adapted by the OAM server entity, or more precisely, by the profile optimizing units. The monitoring results received from the network nodes (step 401) are used in optimization (step 402) of the configuration profiles that the results relate to, and the possible changes made to the configuration profile(s) during the optimization are then updated (step 403) to corresponding configuration profiles in the configuration database and/or in the network nodes. When updating a configuration profile to a network node, the event identifier may be used to indicate the configuration profile that is updated. If SON functionality is implemented, the adaptation procedure may be performed by means of SON procedures that are available, in which case it may be performed even in a network node. An advantage of the adaptation is that the predefined configuration may be updated to better correspond to a real life situation.

Figure 5 illustrates an example in which a real life feed is received in the OAM system in a form of an event input (step 501). The event input may be that a hockey match is to be played at a certain time in the stadium, or that there will be rain showers in the afternoon. In response to the event input, it is checked, in step 502, whether there exists a predefined configuration profile or configuration profiles for the event, the event input indicates, or for a corresponding event. If configuration profile(s) have been predefined, trigger events relating to the event input are set in step 503. If the event input is that a snow storm started, the trigger event may be set to "now". If there are no predefined configuration profiles (step 502), they are created in step 504. The configuration profiles may be created as described with Figure 2 above.

In an implementation, the event input may be receiving event information, in which case in step 502 it is checked, whether a traffic pattern received in the event input matches to corresponding event information for which configuration profile(s) have been predetermined. In that case, the existing definitions may be copied to be associated with the event, or event information relating to the configuration profiles may be updated to refer also to this event. Although in the above, the term "configuration profile" is used, it should be appreciated that it is a synonym to the term "configuration".

The steps and related functions described above in Figures 2 to 5 are in no absolute chronological order, and some of the steps may be performed simultaneously or in an order differing from the given one. Other functions can also be executed between the steps or within the steps. Some of the steps or part of the steps can also be left out or replaced by a corresponding step or part of the step. The steps illustrate a procedure that may be implemented in one or more physical or logical entities.

As stated above, it should be appreciated that the OAM system/OAM server entity, the network nodes, or any corresponding apparatus may comprise other units used in or for information transmission or in or for measurements performed in an access network to support access network radio/air link operations, radio/air resource management, and/or corresponding measurements performed in a core network, in network operations and maintenance, and/or self-organizing networks, for example. However, they are irrelevant to the actual invention and, therefore, they are, and need not to be discussed in more detail here.

The techniques described herein may be implemented by various means so that an apparatus implementing one or more functions described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more units/modules), or combinations thereof. For a firmware or software, implementation can be through units/modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

It will be obvious to a person skilled in the art that, as the technology advances, the inventive concept can be implemented in various ways. The invention and its embodiments are not limited to the examples described above but may vary within the scope of the claims.

## Claims

1. A method comprising:
detecting (301) an occurrence of a trigger event; and, if the occurrence of the trigger event is detected,
changing (302) a first configuration currently in use in a network node to a second configuration for the network node, the second configuration being associated with the trigger event,
**characterized in that**
the second configuration is predefined and provided by a profile configuration unit using a context database comprising predictable information on traffic expectations of the trigger event.

2. A method as claimed in claim 1, further comprising:
changing the configuration by sending an instruction to change to the network node or by sending the predefined configuration to the network node.

3. A method as claimed in claim 1, further comprising:
storing at least two different predefined configurations and the associated trigger events in the network node.

4. A method as claimed in claim 1, further comprising:
storing at least two different predefined configurations in the network node; and
detecting the occurrence of the trigger event by receiving an instruction to change configuration, the instruction indicating the predefined configuration that is to be taken into use.

5. A method comprising:
predefining (203) at least a first configuration for a network node using a first traffic scenario and a second configuration for the network node using a second traffic scenario; and
associating (205) each of the first and second configurations with a trigger event, an occurrence of which causes that a configuration currently in use is changed to one of the first and second configurations associated with the trigger event
**characterized in that**
the second configuration is predefined and provided by a profile configuration unit using a context database comprising predictable information on traffic expectations of the trigger event.

6. A method as claimed in claim 5, further comprising:
determining one or more network nodes that are affected by the first traffic scenario, and
determining for each affected network node a first configuration associated with a trigger event,
determining one or more network nodes that are affected by the second traffic scenario, and
determining for each affected network node a second configuration associated with a trigger event.

7. A method as claimed in claim 5 or 6, further comprising:
receiving an event input;
checking whether there is one or more predefined configurations for a traffic scenario corresponding to the event input; and.
setting, in response to the one or more predefined configurations existing, for the one or more predefined configurations one or more trigger events deduced from the event input.

8. A method as claimed in claim 7, further comprising, in response to the one or more predefined configurations not existing,
predefining one or more network node -specific configurations using the traffic scenario received in the event input or indicated by the event input.

9. A method as claimed in claim 5, 6, 7 or 8, further comprising:
storing the network node -specific configurations in a database in an operations, administrations and maintenance system.

10. A method as claimed in claim 9, further comprising:
detecting an occurrence of a trigger event associated with a predefined configuration; and
sending an instruction to change to the predefined configuration or the predefined configuration to the network node.

11. A method as claimed in claim 5, 6, 7, 8 or 9, further comprising:
sending the network node -specific configuration to a corresponding network node.

12. A method as claimed in any of the preceding claims, further comprising optimizing and updating a predefined configuration on the basis of monitoring results from a network.

13. A computer program product comprising computer program code configured to perform a method as claimed in any one of the claims 1 to 12 when executed on an apparatus.

14. An apparatus (300, 201, 202, 203) comprising means for implementing a method as claimed in any of claims 1 to 12.

15. A system comprising
a network node configured to perform a method as claimed in claim 1, 3 or 4; and
an operations, administrations and maintenance system comprising means configured to perform a method as claimed in any of claims 5 to 12.

## Patentansprüche

1. Verfahren, umfassend:
Erfassen (301) eines Auftretens eines Triggerereignisses; und, wenn das Auftreten des Triggerereignisses erfasst wird,
Ändern (302) einer ersten Konfiguration, die derzeit in einem Netzwerkknoten verwendet wird, in eine zweite Konfiguration für den Netzwerkknoten, wobei die zweite Konfiguration dem Triggerereignis zugeordnet ist,
**dadurch gekennzeichnet, dass**
die zweite Konfiguration vordefiniert ist und von einer Profilkonfigurationseinheit unter Verwendung einer Kontextdatenbank bereitgestellt wird, die vorhersehbare Informationen über die Verkehrserwartungen des Triggerereignisses umfasst.

2. Verfahren nach Anspruch 1, ferner umfassend:
Ändern der Konfiguration durch Senden einer Anweisung zum Ändern an den Netzwerkknoten oder durch Senden der vordefinierten Konfiguration an den Netzwerkknoten.

3. Verfahren nach Anspruch 1, ferner umfassend:
Speichern von mindestens zwei verschiedenen vordefinierten Konfigurationen und den zugehörigen Triggerereignissen im Netzwerkknoten.

4. Verfahren nach Anspruch 1, ferner umfassend:
Speichern von mindestens zwei verschiedenen vordefinierten Konfigurationen in dem Netzwerkknoten; und
Erfassen des Auftretens des Triggerereignisses durch Empfangen einer Anweisung zum Ändern der Konfiguration, wobei die Anweisung die vordefinierte Konfiguration angibt, die verwendet werden soll.

5. Verfahren, umfassend:
Vordefinieren (203) mindestens einer ersten Konfiguration für einen Netzwerkknoten unter Verwendung eines ersten Verkehrsszenarios und einer zweiten Konfiguration für den Netzwerkknoten unter Verwendung eines zweiten Verkehrsszenarios; und
Zuordnen (205) jeder der ersten und zweiten Konfigurationen zu einem Triggerereignis, dessen Auftreten bewirkt, dass eine aktuell verwendete Konfiguration in eine der ersten und zweiten Konfigurationen geändert wird, die dem Triggerereignis zugeordnet sind,
**dadurch gekennzeichnet, dass**
die zweite Konfiguration vordefiniert ist und von einer Profilkonfigurationseinheit unter Verwendung einer Kontextdatenbank bereitgestellt wird, die vorhersehbare Informationen über die Verkehrserwartungen des Triggerereignisses umfasst.

6. Verfahren nach Anspruch 5, ferner umfassend:
Bestimmen eines oder mehrerer Netzwerkknoten, die von dem ersten Verkehrsszenario betroffen sind, und
Bestimmen einer ersten Konfiguration, die einem Triggerereignis zugeordnet ist, für jeden betroffenen Netzwerkknoten,
Bestimmen eines oder mehrerer Netzwerkknoten, die von dem zweiten Verkehrsszenario betroffen sind, und
Bestimmen einer zweiten Konfiguration, die einem Triggerereignis zugeordnet ist, für jeden betroffenen Netzwerkknoten,

7. Verfahren nach Anspruch 5 oder 6 ferner umfassend:
Empfangen einer Ereigniseingabe;
Prüfen, ob eine oder mehrere vordefinierte Konfigurationen für ein Verkehrsszenario vorhanden sind, das der Ereigniseingabe entspricht; und
Einstellen eines oder mehrerer Triggerereignisse, die aus der Ereigniseingabe abgeleitet werden, als Reaktion auf eine oder mehrere vorhandene vordefinierte Konfigurationen für die eine oder mehreren vordefinierten Konfigurationen.

8. Verfahren nach Anspruch 7, ferner umfassend, als Reaktion auf die eine oder die mehreren nicht vorhandenen vordefinierten Konfigurationen, Vordefinieren einer oder mehrerer netzwerkknotenspezifischer Konfigurationen unter Verwendung des Verkehrsszenarios, das in der Ereigniseingabe empfangen oder durch die Ereigniseingabe angegeben wird.

9. Verfahren nach einem der Ansprüche 5, 6, 7 oder 8, ferner umfassend:
Speichern der netzwerkknotenspezifischen Konfigurationen in einer Datenbank in einem Betriebs-, Verwaltungs- und Wartungssystem.

10. Verfahren nach Anspruch 9, ferner umfassend:
Erfassen eines Auftretens eines Triggerereignisses, das einer vordefinierten Konfiguration zugeordnet ist; und Senden einer Anweisung zum Ändern an die vordefinierte Konfiguration oder der vordefinierten Konfiguration an den Netzwerkknoten.

11. Verfahren nach einem der Ansprüche 5, 6, 7, 8 oder 9, ferner umfassend:
Senden der netzwerkknotenspezifischen Konfiguration an einen entsprechenden Netzwerkknoten.

12. Verfahren nach einem der vorhergehenden Ansprüche, ferner umfassend das Optimieren und Aktualisieren einer vordefinierten Konfiguration basierend auf der Überwachung von Ergebnissen aus einem Netzwerk.

13. Computerprogrammprodukt, umfassend einen Computerprogrammcode, der zum Durchführen eines Verfahrens nach einem der Ansprüche 1 bis 12 ausgelegt ist, wenn er an einer Vorrichtung ausgeführt wird.

14. Vorrichtung (300, 201, 202, 203) umfassend Mittel zum Implementieren eines Verfahrens nach einem der Ansprüche 1 bis 12.

15. System, umfassend:
einen Netzwerkknoten, der zum Durchführen eines Verfahrens nach einem der Ansprüche in Anspruch 1, 3 oder 4 ausgelegt ist; und
ein Betriebs-, Verwaltungs- und Wartungssystem, umfassend Mittel, die zum Durchführen eines Verfahrens nach einem der Ansprüche 5 bis 12 ausgelegt sind.

## Revendications

1. Procédé comprenant :
la détection (301) d'une occurrence d'un événement de déclenchement ; et, si l'occurrence de l'événement de déclenchement est détectée,
le passage (302) d'une première configuration en cours d'utilisation dans un noeud de réseau à une seconde configuration pour le noeud de réseau, la seconde configuration étant associée à l'événement de déclenchement,
**caractérisé en ce que**
la seconde configuration est prédéfinie et fournie par une unité de configuration de profil à l'aide d'une base de données contextuelle comprenant des informations prévisibles sur des prévisions de trafic de l'événement de déclenchement.

2. Procédé selon la revendication 1, comprenant en outre :
la modification de la configuration par l'envoi d'une instruction de passage au noeud de réseau ou par l'envoi de la configuration prédéfinie au noeud de réseau.

3. Procédé selon la revendication 1, comprenant en outre :
le stockage d'au moins deux configurations prédéfinies différentes et des événements de déclenchement associés dans le noeud de réseau.

4. Procédé selon la revendication 1, comprenant en outre :
le stockage d'au moins deux configurations prédéfinies différentes dans le noeud de réseau ; et
la détection de l'occurrence de l'événement de déclenchement par la réception d'une instruction de modification d'une configuration, l'instruction indiquant la configuration prédéfinie qui doit être utilisée.

5. Procédé comprenant :
la prédéfinition (203) d'au moins une première configuration pour un noeud de réseau à l'aide d'un premier scénario de trafic et d'une seconde configuration pour le noeud de réseau à l'aide d'un second scénario de trafic ; et
l'association (205) de chacune des première et seconde configurations à un événement de déclenchement, dont une occurrence entraîne qu'une configuration en cours d'utilisation est passée à une des première et seconde configurations associées à l'événement de déclenchement
**caractérisé en ce que**
la seconde configuration est prédéfinie et fournie par une unité de configuration de profil à l'aide d'une base de données contextuelle comprenant des informations prévisibles sur des prévisions de trafic de l'événement de déclenchement.

6. Procédé selon la revendication 5, comprenant en outre :
la détermination d'un ou plusieurs noeuds de réseau qui sont affectés par le premier scénario de trafic, et
la détermination pour chaque noeud de réseau affecté d'une première configuration associée à un événement de déclenchement,
la détermination d'un ou plusieurs noeuds de réseau qui sont affectés par le second scénario de trafic, et
la détermination pour chaque noeud de réseau affecté d'une seconde configuration associée à un événement de déclenchement.

7. Procédé selon la revendication 5 ou 6, comprenant en outre :
la réception d'une entrée d'événement ;
le contrôle pour savoir s'il existe une ou plusieurs configurations prédéfinies pour un scénario de trafic correspondant à l'entrée d'événement ; et
le réglage, en réponse à l'une ou aux configurations prédéfinies existantes, pour l'une ou les configurations prédéfinies, de l'un ou des événements de déclenchement déduits à partir de l'entrée d'événement.

8. Procédé selon la revendication 7, comprenant en outre, en réponse à l'une ou aux configurations prédéfinies n'existant pas,
la prédéfinition d'une ou plusieurs configurations spécifiques de noeud de réseau à l'aide du scénario de trafic reçu dans l'entrée d'événement ou indiqué par l'entrée d'événement.

9. Procédé selon la revendication 5, 6, 7 ou 8, comprenant en outre :
le stockage des configurations spécifiques de noeud de réseau dans une base de données dans un système d'exploitation, d'administration et de maintenance.

10. Procédé selon la revendication 9, comprenant en outre :
la détection d'une occurrence d'un événement de déclenchement associé à une configuration prédéfinie ; et
l'envoi d'une instruction de passer à la configuration prédéfinie ou de la configuration prédéfinie au noeud de réseau.

11. Procédé selon la revendication 5, 6, 7, 8 ou 9, comprenant en outre :
l'envoi de la configuration spécifique au noeud de réseau à un noeud de réseau correspondant.

12. Procédé selon l'une quelconque des revendications précédentes, comprenant en outre l'optimisation et la mise à jour d'une configuration prédéfinie sur la base de résultats de surveillance à partir d'un réseau.

13. Produit de programme informatique comprenant un code de programme informatique configuré pour exécuter un procédé selon l'une quelconque des revendications 1 à 12 lorsqu'il est exécuté sur un appareil.

14. Appareil (300, 201, 202, 203) comprenant des moyens de mise en oeuvre d'un procédé selon l'une quelconque des revendications 1 à 12.

15. Système comprenant
un noeud de réseau configuré pour exécuter un procédé selon la revendication 1, 3 ou 4 ; et
un système d'exploitation, d'administration et de maintenance comprenant des moyens configurés pour exécuter un procédé selon l'une quelconque des revendications 5 à 12.
